# EUROPEAN PATENT APPLICATION

(11) **EP 2 088 292 A2**
(43) Date of publication of application: **12.08.2009**
(21) Application number: 09152214.4
(22) Date of filing: 05.02.2009
(51) Int. Cl.: F01N 3/28

(54) **Method and jig for manufacturing metallic catalyst carrier**

(30) Priority: 05.02.2008 JP 2008025509
(71) Applicant: Calsonic Kansei Corporation, Saitama-shi, Saitama (JP)
(72) Inventor: Sano, Akio, c/o Calsonic Kansei Corporation, Kita-ku, Saitama-shi, Saitama (JP); Ando, Shuyo, c/o Calsonic Kansei Corporation, Kita-ku, Saitama-shi, Saitama (JP); Hioki, Shinji, c/o Calsonic Kansei Corporation, Kita-ku, Saitama-shi, Saitama (JP)
(74) Representative: Zimmermann & Partner

(57) **Abstract**

According to the invention, a manufacturing method for a metallic catalyst carrier (1) including a cylindrical outer casing (3) and a honeycomb unit (2) that is formed of a first metal foil (4) made in a corrugated shape and a second metal foil (5) made in a minutely corrugated shape or a flat shape, the method includes: rolling the first metal foil (4) with the second metal foil (5) in a state that the first metal foil (4) are disposed on the second metal foil (5), forming a circumferential face of the honeycomb unit into a serrated face, and press fitting the honeycomb unit into the cylindrical outer casing (3) after the forming step.

## Description

### BACKGROUND

### 1. Field

The present invention relates to a method and jig for manufacturing a metallic catalyst carrier.

### 2. Description of the Related Art.

Conventionally, there is known a technique regarding a metallic catalyst carrier including a honeycomb element which is made by rolling a corrugated metal foil and a minutely corrugated or flat metal foils in a multiplicity of layers in such a state that the metal foils are superimposed one on the other and a cylindrical outer casing which accommodates therein the honeycomb element so made (refer to JP-A-2004-154699 and JP-A-2005-313083).

In addition, normally, by press fitting the honeycomb element into the outer casing for accommodation therein using a jig, joining portions of both the metal foils are joined together in such a state that the joining portions are brought intro abutment with each other in an ensured fashion (refer to JP-A-H06-47284 and JP-A-2005-315252).

In the conventional inventions described above, however, there was a fear that part of an outer circumference of the honeycomb element is deflected largely inwards to thereby be buckled when the honeycomb element was press fitted into the outer casing.

In addition, a large gap is produced between the buckled portion on the honeycomb element and the outer casing, and since exhaust gases pass through this gap, the exhaust gas purifying performance of the catalytic converter is reduced.

Additionally, cells are compressed at the buckled portion to thereby be deformed into an abnormal shape, leading to a reduction in curability of the honeycomb element.

### SUMMARY OF THE INVENTION

With a view to attaining the object, according to a first aspect of the invention there is provided a metallic catalyst carrier manufacturing method including the steps of rolling a corrugated metal foil and a minutely corrugated or flat metal foil in a multiplicity of layers in such a state that the metal foils are superimposed one on the other so as to form the foils into a rolled honeycomb element and thereafter, press fitting the rolled honeycomb element so formed into a cylindrical outer casing for accommodation therein, the metallic catalyst carrier manufacturing method including the step of forming a serrated configuration on an outer circumferential portion of the honeycomb element before the rolled honeycomb is press fitted into the outer casing.

In addition, according to a second aspect of the invention, there is provided a metallic catalyst carrier manufacturing jig for forming a serrated configuration on an outer circumferential portion of a rolled honeycomb element which is formed by rolling a corrugated metal foil and a minutely corrugated or flat metal foil in a multiplicity of layers in such a state that the metal foils are superimposed one on the other so as to form the foils into the rolled honeycomb element, the metallic catalyst carrier manufacturing jig including a through hole having a tapered inclined surface which is formed in such a manner as to penetrate through the jig and serrated grooves which are formed at a diametrically contracted end portion of the through hole, wherein the rolled honeycomb element is inserted into the through hole in the jig from a diametrically expanded end portion thereof and is then passed through the diametrically contracted end portion, so as to form a serrated configuration on the outer circumferential portion of the honeycomb element.

### [Advantage of the Invention]

According to the first aspect of the invention, the method includes the step of forming the serrated configuration on the outer circumferential portion of the honeycomb element before the rolled honeycomb is press fitted into the outer casing.

Consequently, since the outer circumferential portion of the honeycomb holds pliability produced by the serrated configuration formed thereon, a local stress concentration can be avoided when the honeycomb element is press fitted into the outer casing, thereby making it possible to prevent the buckling of the honeycomb element.

According to the second aspect of the invention, the jig includes the through hole having the tapered inclined surface which is formed in such a manner as to penetrate through the jig and the serrated grooves formed at the diametrically contracted end portion of the through hole.

In addition, by allowing the rolled honeycomb element to pass through the through hole in the jig, the outer circumferential portion of the honeycomb element can be worked on to have the serrated configuration.

Consequently, the outer circumferential portion of the honeycomb element can be worked on to have the serrated configuration with the simple jig.

According to another aspect of the invention, there is provided a manufacturing method for a metallic catalyst carrier including a cylindrical outer casing and a honeycomb unit that is formed of a first metal foil made in a corrugated shape and a second metal foil made in a minutely corrugated shape or a flat shape, the method including: rolling up the first metal foil with the second metal foil in a state that the first metal foil are disposed on the second metal foil,
forming a circumferential face of the honeycomb unit into a serrated face, and press fitting the honeycomb unit into the cylindrical outer casing after the forming step.

According to another aspect of the invention, there is provided a metallic catalyst carrier manufacturing jig for forming a circumferential face of a honeycomb unit into a serrated face, the jig including: a through hole having a tapered inclined surface, a diametrically expanded end portion, and a diametrically contracted end portion; and a plurality of serrated grooves formed at the diametrically contracted end portion, wherein the honeycomb unit is inserted into the through hole from the diametrically expanded end portion, and is pushed out from the diametrically contracted end portion to make a circumferential face of the honeycomb unit serrated.

### BRIEF DESCRIPTION OF THE SEVERAL VIEWS OF THE DRAWINGS

Fig. 1 is a side view of a metallic catalyst carrier of Embodiment 1.
Fig. 2 is a side sectional view of the metallic catalyst carrier of Embodiment 1.
Fig. 3 is an explanatory diagram explaining a rolling step in a manufacturing process of a honeycomb element of Embodiment 1.
Fig. 4 is a perspective view of a honeycomb element of Embodiment 1 which results immediately after the rolling has been completed.
Fig. 5 is an explanatory diagram explaining a serrations forming step of forming serrations on the honeycomb element of Embodiment 1.
Fig. 6 is a sectional view taken along the line S5-S5 in Fig. 5.
Fig. 7 is an explanatory diagram explaining a press fitting step of press fitting the honeycomb element of Embodiment 1 into an outer casing.
Fig. 8 is a diagram explaining the manufacturing of a metallic catalyst carrier of Embodiment 2.

### DETAILED DESCRIPTION

Hereinafter embodiments of the invention will be described based on accompanying drawings.

### [Embodiment 1]

Hereinafter, Embodiment 1 will be described.

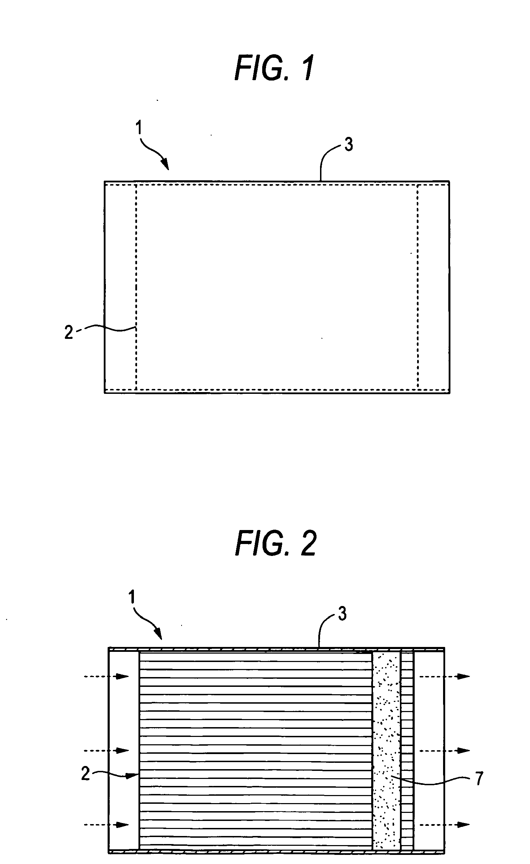

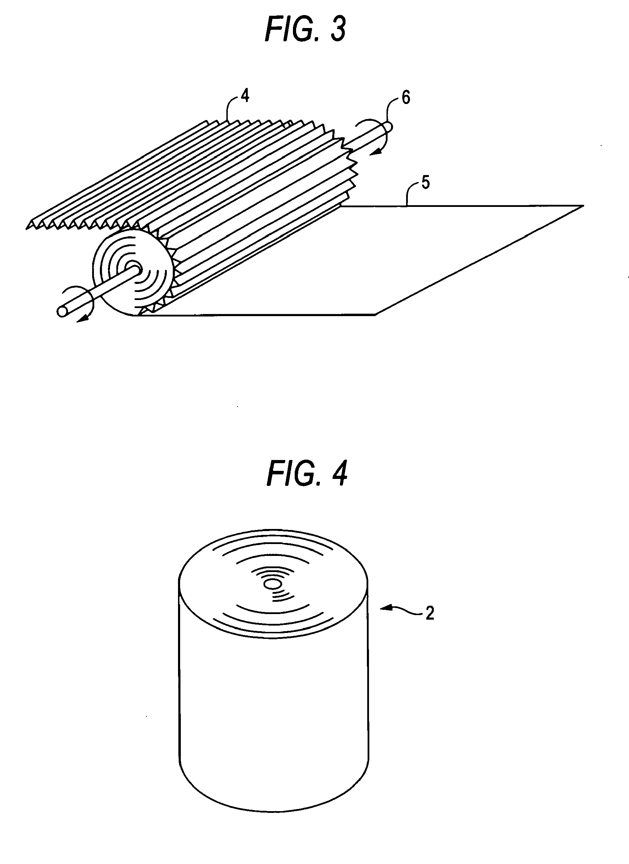

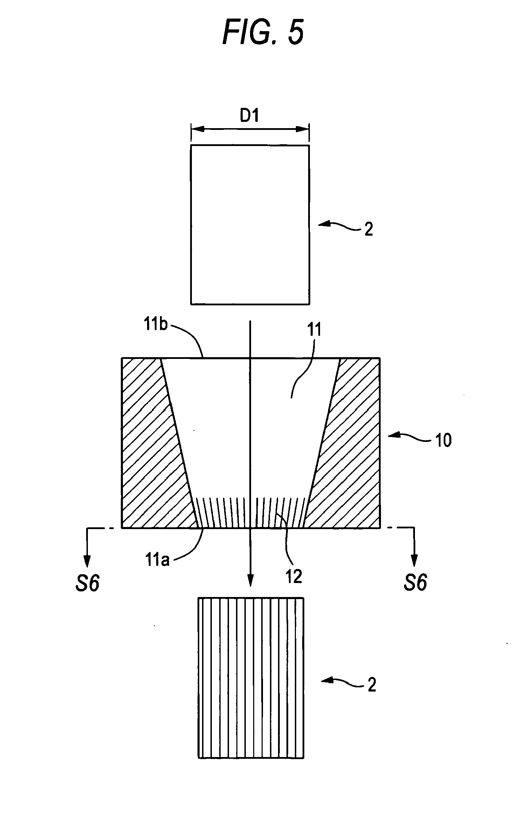

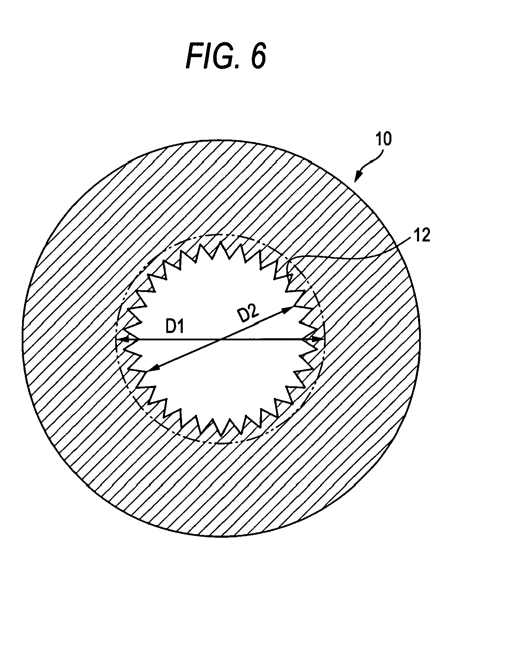

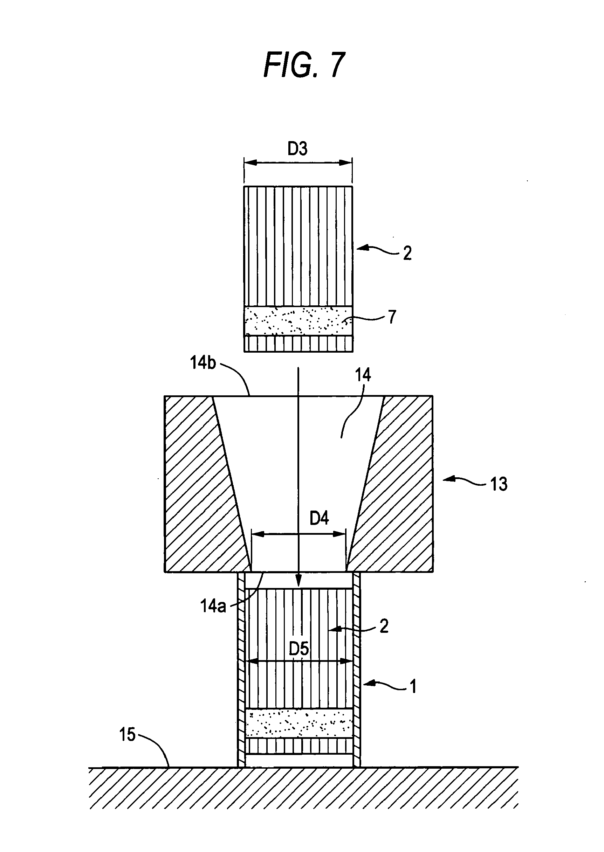

Fig. 1 is a side view of a metallic catalyst carrier of Embodiment 1, Fig. 2 is a side sectional view of the same, Fig. 3 is an explanatory diagram explaining a rolling step in a manufacturing process of a honeycomb element of Embodiment 1, Fig. 4 is a perspective view of a honeycomb element of Embodiment 1 which results immediately after the rolling has been completed, Fig. 5 is an explanatory diagram explaining a serrations forming step of forming serrations on the honeycomb element of Embodiment 1, Fig. 6 is a sectional view taken along the line S5-S5 in Fig. 5, and Fig. 7 is an explanatory diagram explaining a press fitting step of press fitting the honeycomb element of Embodiment 1 into an outer casing.

Firstly, an overall configuration of a metallic catalyst carrier will be described.

As is shown in Figs. 1, 2, a metallic catalyst carrier 1 of Embodiment 1 is made up of a cylindrical honeycomb element 2 and a cylindrical outer casing 3 which accommodates the honeycomb element 2 therein.

Next, a manufacturing method of the metallic catalyst carrier 1 will be described.

### <Rolling Step>

In manufacturing the metallic catalyst carrier 1, firstly, the honeycomb element 2 is formed.

Specifically, as is shown in Figs. 3, 4, initial end portions a corrugated metal foil 4 and a flat metal foil 5, which are both long, are secured to a roll-up spindle 6 of a known rolling or roll-up machine, and thereafter, both the metal foils 4, 5 are wound in a multiplicity of layers in such a state that the metal foils are superimposed one on the other to thereby form the metal foils into a rolled honeycomb element 2.

Note that the flat metal foil 5 is disposed so as to constitute an outermost circumference of the honeycomb element 2 so formed.

In addition, although the illustration is omitted, germinating end portions of both the metal foils 4, 5 are fixed to the outer circumferential portion of the honeycomb element 2 through spot welding or the like.

### <Serrations Forming Step>

Next, using a jig 10, which will be described later, a serrated configuration is formed on the outer circumferential portion of the honeycomb element 2.

Specifically, as is shown in Figs. 5, 6, a jig 10 of Embodiment 1 includes a through hole 11 having a downwardly tapered inclined surface which is formed in such a manner as to penetrate through the jig 10 and serrated grooves 12 formed at a diametrically contracted end portion 11a of the through hole 11.

In addition, as is shown in Fig. 6, a relationship between an outside diameter D1 of the wound or rolled honeycomb element 2 and a smallest inside diameter D2 measured between the diametrically confronting serrated grooves 12 is set to be D1 > D2.

Note that although the depth, number and pitch of the serrated grooves 12 can be set as required, for example, the depth and pitch of serrations are set to small values ranging from 0.1 to 10 mm and 4 to 10 mm, respectively.

In addition, as is shown in Fig. 5, the honeycomb element 2 is inserted into the through hole 11 in the jig 10 from a diametrically expanded end portion 11b using a driving device whose illustration is omitted. Thereafter, the honeycomb element 2 is passed through the diametrically contracted end portion 11a, so as to form a serrated configuration matching the serrated grooves 12 on the outer circumferential portion of the honeycomb element 2. As this occurs, the honeycomb element 2 is gradually reduced in diametrical dimension along the inclined surface of the through hole 11, and thereafter, the serrated configuration is formed at the same time as the honeycomb element 2 is gradually reduced further in diametrical dimension by the serrated grooves 12, then, the honeycomb element 2 being plastically deformed at the portion where the serrated configuration is so formed.

In addition, the configuration of the driving device can be set as required. For example, the driving device is disposed above the through hole 11 and is made up of a pressing portion which is drawn to stick to an upper end face of the honeycomb element 2 by suction of air and a piston rod which is connected to an upper portion of the pressing portion and is adapted to be extended and contracted pneumatically or hydraulically in a vertical direction, whereby the honeycomb element 2 is inserted into the through hole 11 by causing the piston rod to extend downwards while holding the honeycomb element 2 by the pressing portion.

### <Press Fitting Step>

Next, the honeycomb element 2 is press fitted into the outer casing 3 using a known jig 13, which will be described later.

Specifically, as is shown in Fig. 7, the jig 13 of Embodiment 1 includes a through hole 14 having a downwardly tapered inclined surface which is formed in such a manner as to penetrate through the jig 13.

In addition, the external housing 3 is placed on a base table 15 in such a manner as to face a diametrically contracted end portion 14a of the through hole 14 in the jig 13.

Further, a relationship between an outside diameter 3 of the honeycomb element 2, an inside diameter D4 of the diametrically contracted end portion 14a of the through hole 14 and an inside diameter D5 of the outer casing 3 is set to be D3 > D5 > D4.

Then, in such a state that a wax material foil 7 is provided partially on the outer circumferential portion of the honeycomb element 2 in such a manner as to extend along the full circumference, the honeycomb element 2 is inserted into the through hold 14 in the jig 13 from a diametrically expanded end portion 14b of the through hole 14 using a driving device whose illustration is omitted and is then passed through the diametrically contracted end portion 14a so as to be press fitted into the outer casing 3.

Note that the driving device used here is such as to have the same configuration as that of the driving device which was used in the serration forming step.

Here, with the conventional inventions, there has been the fear that part of the outer circumference of the honeycomb element is deflected largely inwards to thereby be buckled when the honeycomb element is inserted into the outer casing.

In contrast with this, according to Embodiment 1, since the outer circumferential portion of the honeycomb element 2 has pliability produced by the serrated configuration formed on the outer circumferential surface of the honeycomb element 2, a local stress concentration can be avoided which would otherwise be produced when the honeycomb element 2 is press fitted in the outer casing 3, thereby making it possible to prevent the buckling of the honeycomb element 2.

Further, to describe this in detail, with the conventional inventions, in the event that a local stress concentration occurs at part of the honeycomb element 2 when the honeycomb element 2 is inserted into the outer easing 3, the part where stress is so concentrated is deformed inwardly towards the center of the portion in question, and the deformed portion constitutes a large through hole.

In addition, various factors are considered as causes for the local stress concentration on the honeycomb element 2 which include the shape of corrugations of the corrugated metal foil 4, variation in dimensions, twist produced therein when the metal foils are wound, and deformation produced therein when the honeycomb element 2 is press fitted into the outer casing 3.

In contrast with this, according to Embodiment 1, when the local stress concentration occurs on the honeycomb element 2, corrugations making up the serrated configuration on the outer circumferential portion of the honeycomb element 2 are deformed at angles which are closer to their tangential directions. Because of this, no such large through hole is formed, whereby the buckling of the honeycomb element 2 can be prevented.

In addition, since the relationship between the diameter 3 of the honeycomb element 2, the inside diameter D4 of the diametrically contracted end portion 14a of the through hole 14 and the inside diameter D5 of the outer casing 3 is set to be D3 > D5 > D4, the honeycomb element 2 is press fitted into the outer casing 3 in such a state that the outside diameter 3 of the honeycomb element 2 is made slightly smaller than the inside diameter D5 of the outer casing, whereby the press fit resistance of the honeycomb element 2 is reduced, thereby making it possible to prevent the buckling of the honeycomb element 2.

Note that the relationship can also be set to become D3 > D5 = D4.

Furthermore, since the wax material foil 7 is provided after the serrations have been formed, there can be eliminated a fear that the serrated grooves 12 are caught on the wax material foil 7 when serrations are formed to thereby peel off the wax material foil 7.

Lastly, by the honeycomb element 2 press fitted in the outer casing 3 being subjected to heat treatment, portions where top portions of corrugations of the metal foil 4 are in contact with the metal foil 5 are diffusion bonded together, and part of the outer circumferential portion of the honeycomb element 2 and the outer casing 3 are fixedly brazed together by the melted wax material foil 7.

In addition, exhaust emission purifying catalysts are carried on surfaces of cells formed by gaps between the two metal foils 4, 5 of the honeycomb element 2.

Next, the function of Embodiment 1 will be described.

The metal catalyst carrier 1 configured as has been described heretofore is interposed in such a state that an exhaust side upstream end portion of the outer casing 3 is connected for communication with an exhaust system of an internal combustion engine of a motor vehicle, and as is shown in Fig. 2, exhaust gases (indicated by arrows attached to broken lines in the figure) pass through the cells in the honeycomb element 2 within the outer casing 3 from an engine side exhaust upstream side thereof, whereby by the action of the catalysts, harmful constituents (HC, CO, NOx) in exhaust gases are purified into harmless constituents (CO₂, H₂O), which are discharged from an exhaust downstream side of the honeycomb element 2.

Note that while in Embodiment 1, the wax material foil 7 is provided on the downstream side of the honeycomb element 2 when exhaust gases pass therethrough, the invention is not limited thereto.

Next, the advantage of Embodiment 1 will be described.

Thus, as has been described heretofore, in the metallic catalyst carrier of Embodiment 1, there is provided the metallic catalyst carrier 1 manufacturing method including the steps of rolling the corrugated metal foil 4 and a minutely corrugated or flat metal foil 5 in a multiplicity of layers in such a state that the metal foils are superimposed one on the other so as to form the foils into the rolled honeycomb element and thereafter, press fitting the rolled honeycomb element so formed into the cylindrical outer casing 3 for accommodation therein and the method includes the step of forming the serrated configuration on the outer circumferential portion of the honeycomb element 2 before the honeycomb element 2 is press fitted into the outer casing 3. Consequently, the honeycomb element 2 can be accommodated within the outer casing 3 in such a state that the honeycomb element 2 is press fitted in the outer casing 3 in a good condition.

In addition, there is provided the jig 13 for forming the serrated configuration on the outer circumferential portion of the rolled honeycomb element 2 which is formed by rolling the corrugated metal foil 4 and the minutely corrugated or flat metal foil 5 in a multiplicity of layers in such a state that the metal foils are superimposed one on the other so as to form the foils into the rolled honeycomb element, the jig 13 comprising the through hole 14 having the tapered inclined surface which is formed in such a manner as to penetrate through the jig 13 and the serrated grooves 12 which are formed at the diametrically contracted end portion 11a of the through hole 14, wherein the rolled honeycomb element 2 is inserted into the through hole 14 in the jig 13 from the diametrically expanded end portion 11b thereof and is then passed through the diametrically contracted end portion 11a, so as to form the serrated configuration on the outer circumferential portion of the honeycomb element 2. consequently, the serrated configuration can be formed on the outer circumferential portion of the honeycomb element 2 with the simple jig 13.

### [Embodiment 2]

Hereinafter, Embodiment 2 will be described.

In Embodiment 2, like reference numerals will be given to like constituent members to those of Embodiment 1, and the description thereof will be omitted, only differences being described in detail.

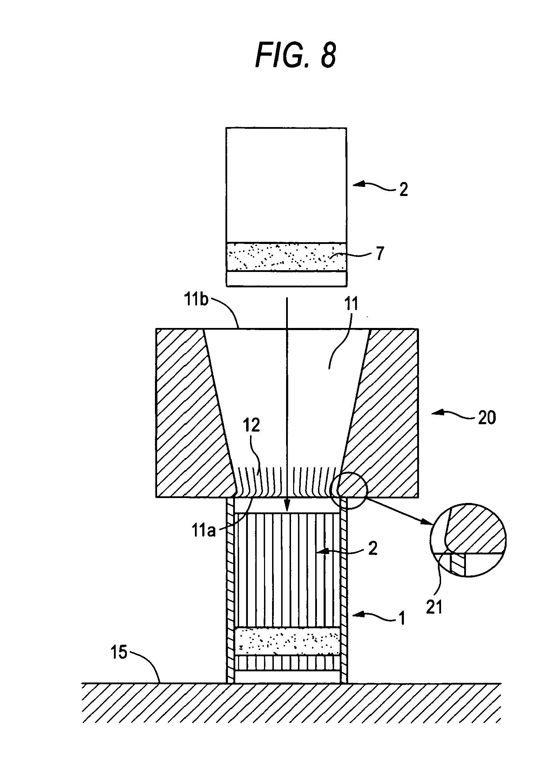

Fig. 8 is an explanatory diagram explaining the manufacturing of a metallic catalyst carrier 1 of Embodiment 2.

As is shown in Fig. 8, in Embodiment 2, a jig 20 is adopted which doubles as the jig 10 and the jig 13 which are described in Embodiment 1. In addition, curved portions 21 having a predetermined radius of curvature are formed along a circumferential edge portion to which serrated grooves 12 are made to open which are formed in a through hole 11 of the jig 20.

In addition, a wax material foil 7 is provided partially on an outer circumference of a wound or rolled honeycomb element 2 in such a manner as to extend along the full circumference, and an outer casing 3 is disposed at a diametrically contracted end portion 11a of the through hole 11 in such a manner as to confront the diametrically contracted end portion. Thereafter, the honeycomb element 2 is inserted into the through hole 11 in the jig 20 from a diametrically expanded end portion 11b of the through hole 11 using a similar driving device to that used in Embodiment 1 and is then passed through the diametrically contracted end portion 11a, so as to be press fitted into the outer casing 3.

By this configuration, the honeycomb element 2 can be press fitted into the outer casing 7 at the same time as a serrated configuration is formed on the outer circumferential portion (together with the wax material foil 7) of the honeycomb element 2,

Consequently, the serration forming step and the press fitting step which were described in Embodiment 1 can be implemented simultaneously.

In addition, since the curved portions 21 having the predetermined radius of curvature are formed along the circumferential edge portion to which the serrated grooves 12 are made to open, the separation of the wax material foil on the honeycomb element 2 can be prevented which would otherwise be caused due to the wax material foil being caught on the serrated grooves 12.

Thus, while the embodiments have been described heretofore, the invention is not limited to those embodiments but can be modified variously with respect to designs thereof without departing from the spirit and scope of the invention, and the modifications so made are contained in the invention.

For example, the wax material foil 7 may be omitted, so that the honeycomb element 2 and the outer casing 3 may be fixed together through diffusion bonding.

In addition, while the outer circumference of the honeycomb element 2 is formed into a circular shape, the outer circumference may be formed into other shapes including an oval shape and a race track shape.

Additionally, the metal foil may be replaced by a minutely corrugated metal foil 4 halving a shallower depth and a larger corrugations pitch than the metal foil 4.

According to one embodiment, there invention was made with a view to solving the disadvantage, and an object thereof is to provide a method and jig for manufacturing a metallic catalyst carrier which enables a honeycomb element to be accommodated in an outer casing in such a state that the honeycomb element is press fitted into the outer casing in a good condition.

## Claims

1. A manufacturing method for a metallic catalyst carrier including a cylindrical outer casing and a honeycomb unit that is formed of a first metal foil made in a corrugated shape and a second metal foil made in a minutely corrugated shape or a flat shape, the method comprising:
rolling up the first metal foil with the second metal foil in a state that the first metal foil are disposed on the second metal foil,
forming a circumferential face of the honeycomb unit into a serrated face, and
press-fitting the honeycomb unit into the cylindrical outer casing after the forming step.

2. A metallic catalyst carrier manufacturing jig for forming a circumferential face of a honeycomb unit into a serrated face, the jig comprising:
a through hole having a tapered inclined surface, a diametrically expanded end portion, and a diametrically contracted end portion; and
a plurality of serrated grooves formed at the diametrically contracted end portion,
wherein the honeycomb unit is inserted into the through hole from the diametrically expanded end portion, and is pushed out from the diametrically contracted end portion to make a circumferential face of the honeycomb unit serrated.

3. A metallic catalyst carrier manufacturing jig according to claim 2, wherein the diametrically contracted end portion is formed so that an outer casing disposed at the diametrically contracted end portion accommodates the honeycomb unit therein when the honeycomb unit is pushed out from the diametrically contracted end portion.

4. A metallic catalyst carrier manufacturing jig according to claim 2, wherein the diametrically contracted end portion includes a chamfered curved portion provided in the vicinity of a circumferential edge portion of the diametrically contracted end portion.

5. A metallic catalyst carrier manufacturing jig according to claim 3, wherein the diametrically contracted end portion includes a chamfered curved portion provided in the vicinity of a circumferential edge portion of the diametrically contracted end portion.
